Europäisches Patentamt

European Patent Office

Office européen des brevets

(11) Publication number: **0 233 074**
A2

## (12) EUROPEAN PATENT APPLICATION

(21) Application number: **87301116.7**

(22) Date of filing: **09.02.87**

(51) Int. Cl.⁴: **C 08 F 240/00**
**C 09 J 3/14**

(30) Priority: **10.02.86 US 827579**

(43) Date of publication of application:
**19.08.87 Bulletin 87/34**

(84) Designated Contracting States:
**AT BE CH DE ES FR GB IT LI LU NL SE**

(71) Applicant: **EXXON CHEMICAL PATENTS INC.**
**1900 East Linden Avenue**
**Linden New Jersey 07036 (US)**

(72) Inventor: **Evans, Morris Lee**
**723 Shadyglen Drive**
**Baton Rouge Louisiana 70816 (US)**

(74) Representative: **Bawden, Peter Charles et al**
**EXXON CHEMICAL LIMITED EXXON CHEMICAL**
**TECHNOLOGY CENTRE PO Box 1**
**Abingdon Oxfordshire OX13 6BB (GB)**

(54) Low color aromatic resins.

(57) Petroleum resins of lightened color while retaining satisfactory melting point and compatibility are provided by a process which comprises catalytically polymerizing an aromatic petroleum cracked or reformed fraction, e.g. an aromatic stream boiling between 80°C and 260°C, sequentially treated with sulfuric Acid followed by distillation to provide an aromatic feedstock portion which is blended with an aliphatic petroleum cracking or reforming fraction feedstock portion containing cationically polymerizable hydrocarbons, less than 0.5 weight percent of cyclodienes and a pentadiene-l,3 to cyclodiene weight ratio of greater than 50, preferably greater than 200 in the presence of a Friedel-Crafts catalyst into a petroleum resin of lightened color and softening point in the range of 90°C to ll5°C.

Petroleum resins of light color are provided by a process which comprises successively treating from two to four times a petroleum cracking or reforming fraction, e.g. an aromatic stream boiling between 80° and 260°C, with concentrated sulfuric acid followed by distillation to provide a feedstock which is thereafter catalyzed in the presence of a Friedel-Craft catalyst into a petroleum resin of light color and high softening point and good compatibility in hot melt adhesive formulations.

EP 0 233 074 A2

## Description

### 'LOW COLOUR AROMATIC RESINS'

This invention relates to low color, aromatic petroleum resins and to their production. In particular, the invention relates to predominantly aromatic resins suitable as tackifiers for adhesive formulations particularly hot melt adhesives, hot melt pressure sensitive adhesives and solvent based pressure sensitive adhesives.

The processing of crude petroleum gives rise to various hydrocarbon fractions which may be subsequently "cracked" by heating, usually in the presence of steam to produce a range of lower boiling products.

Many of the commercial applications of petroleum resins have over recent decades required that the resins be increasingly lighter in color to colorless.

For aliphatic to predominantly aliphatic feedstocks which are cationically polymerized, it was early reported in U.S. Patent No. 2,734,046 that light colored resins can be produced from unsaturated predominantly aliphatic petroleum fractions obtained by steam cracking when the fraction is substantially free of cyclic dienes. It is thus known that these cracked predominantly aliphatic fractions contain cyclodienes which contribute to the formation of gel and adversely affect the color, clarity and other properties of the resin. U.S. Patent Nos. 2,894,937 and 2,946,775 report that it is a simple matter to dimerize these cyclodienes by a thermal soaking treatment and to separate the dimerized hydrocarbons from the remainder and to use this remainder as the aliphatic feed for polymerization by aluminum chloride. Although the resulting resins were of lighter color and had desirable softening points, the colors obtained were still too dark for many industrial applications necessitated by technological developments in pressure sensitive adhesives into which petroleum resins are incorporated. Resins of much lightened color were recently reported obtained (see U.S. Patent No. 4,391,961) by heat soaking a petroleum cracking or reforming fraction containing cationically polymerizable hydrocarbons including from more than 0.5 to 2 weight percent of cyclodienes until the cyclodiene content is no more than 0.5 weight percent and the piperylene to cyclopentadiene weight ratio is above at least 50, distilling said heat soaked petroleum fraction, polymerizing said distilled petroleum fraction in the presence of an aliminum halide catalyst and recovering an aliphatic resin having a Gardner color of no greater than 4.

The polymerization of a feedstock boiling between 80°C and 260°C and containing a mixture of $C_8$ to $C_{10}$ olefinic aromatics such as styrene and indene, with a Friedel-Crafts catalyst such as $AlCl_3$ produces a dark colored resin (Gardner color of ll to l3 based on a 50% solution in toluene) whereas the boron trifluoride catalyzed resin is of lighter color (Gardner color of 8 to ll based on a 50% solution of resin in toluene). The literature reports improving the color and thermal stability of boron trifluoride-phenol complex catalyzed aromatic hydrocarbon resins by heat-treating an aromatic olefin feed stream with a dienophile, e.g. maleic anhydride, and if desired in the presence of an acid including Lewis acids and Bronsted acids, prior to polymerization (U.S. Patent No. 4,l05,843). It is also known to acid refine (including successive acid treatments – see Example) a catalytically cracked petroleum fraction prior to thermally cracking said fraction into a feedstock for Friedel-Crafts (exemplified by a boron trifluoride-ether complex catalyst) catalyzed resin production whereby the resulting resin has a paler color (U.S. Patent No. 3,042,660). Unfortunately, these latter methods involve distillation of the acid treated materials under potentially corrosive conditions in the distillation tower which could also introduce contaminants contributing to darkening of the polymerized distillate fraction.

It has therefore been difficult to provide a light colored petroleum resin from aromatic feedstock and alternative methods proposed for improving color are to polymerise pure aromatic monomers or to hydrogenate the resins both techniques are expensive.

This invention therefore provides aromatic petroleum resins of much lighter color and having a suitable high softening point than present presently known and/or available

### BRIEF DESCRIPTION OF THE DRAWINGS

Figure l is the $C^{13}$ NMR spectra of a resin from a feed that was about 25 weight percent aliphatic and 75 weight percent aromatic (mixed $C_8$-$C_{10}$ vinyl aromatics - Example l0); and

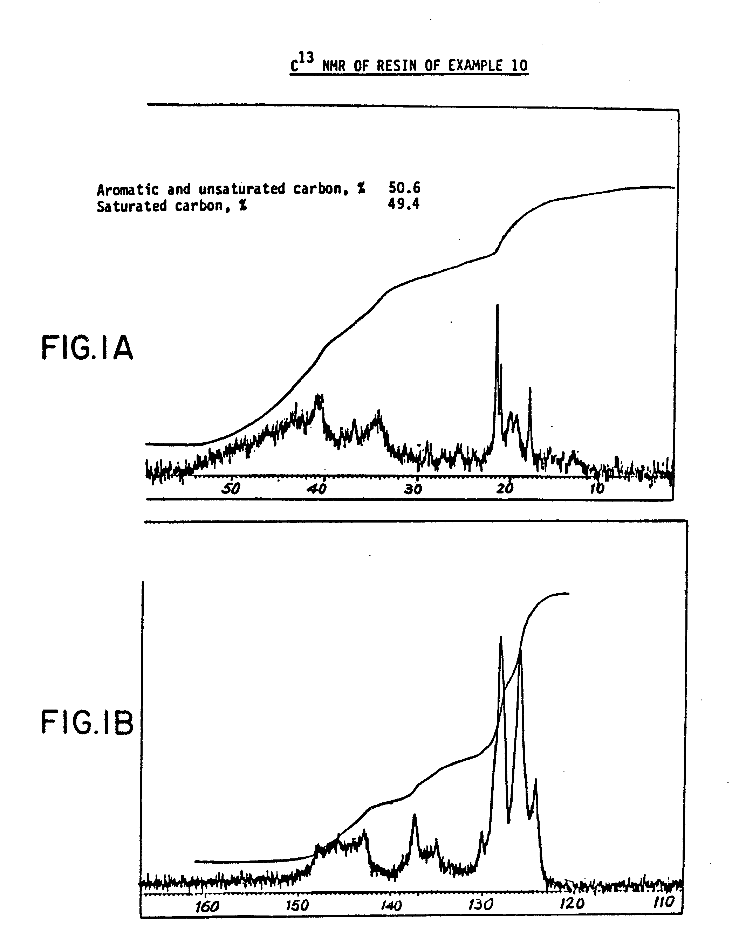

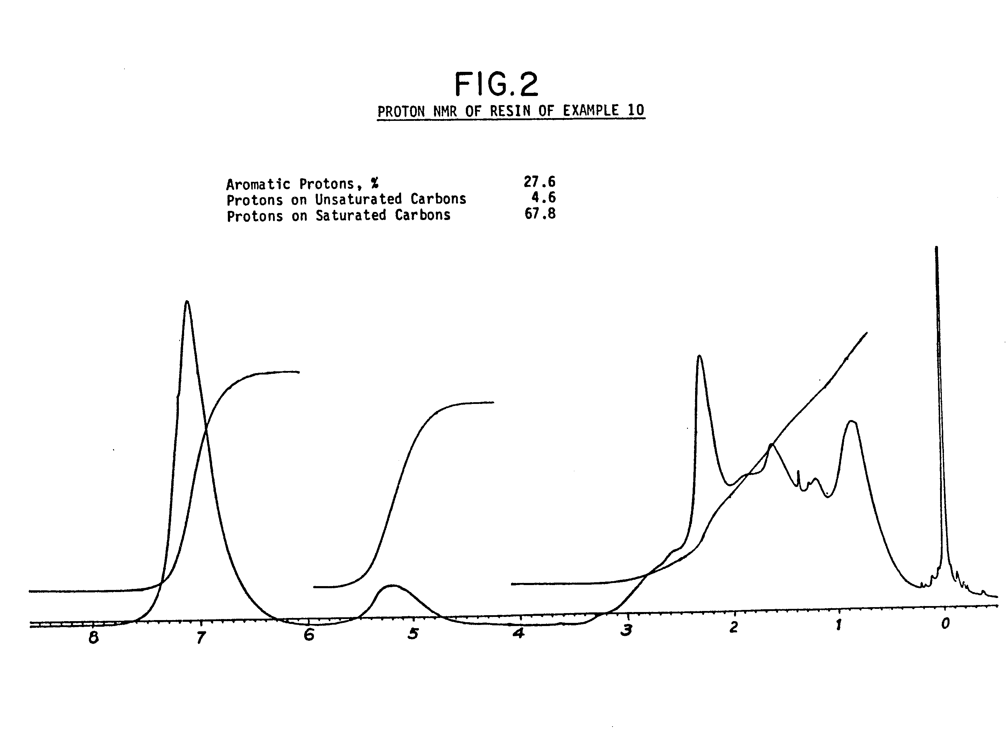

Figure 2 is a proton NMR spectra of the resin of Example l0.

### SUMMARY OF THE INVENTION

The invention therefore provides a predominantly to entirely aromatic resin obtained by Friedel-Crafts polymerization of a predominantly to entirely aromatic fraction feedstock of $C_8$ to $C_{10}$ olefinic aromatics such as styrenes and indenes, said resin having a softening point of 75-l60°C and a Gardner color no greater than 4.

It has been discovered that such resins may be obtained by sequentially treating an aromatic stream boiling between 80 and 260°C which contains $C_8$ to $C_{10}$ olefinic aromatics such as styrene and indene at least twice, preferably 2 to 4 times, with concentrated sulfuric acid and thereafter distilling said stream to recover a lighter polymerization fraction ranging from 40 to 95 weight percent of said treated stream provided an aromatic feedstock portion that can be blended with from 5 to 80, preferably l5 to 60, weight parts of an aliphatic feedstock portion derived from heat soaked steam cracked naphtha having a cyclodiene content of less than about 0.5, preferably about 0.2, weight percent which has been distilled (whereby the dimers and codimers of said cyclodienes are separated from said heat soaked fraction) to a pentadiene - l,3 to cyclodiene weight ratio of at least 50, preferably 200, to provide an aromatic aliphatic blended feedstock for polymerization that yields resins of lighter color and high softening point.

It has been discovered that successively treating at least twice an aromatic stream boiling between 80 and 260°C which contains $C_8$ to $C_{10}$ olefinic aromatics such as styrene and indene, with sulfuric acid and thereafter distilling said stream to recover a lighter polymerization fraction ranging from 45 to 97 weight percent of said treated stream provided a polymerization feedstock that yielded cationically catalyzed petroleum resins of lighter color than those obtained from identical untreated aromatic streams and those streams only treated once with acid.

Thus, in accordance with a further embodiment of this invention there has been realized a process for producing a petroleum resin of light color and high softening point which comprises polymeizing a feedstock blend of cationically polymerizable aliphatic and aromatic hydrocarbons in the presence of Friedel-Craft catalyst and recovering a resin having Gardner color of no greater than 4 when measured on a solution of equal weights of said resin and toluene and a softening point of 90°C to ll5°C as determined by ASTM Procedure E-28, said blend comprising from 0.05 to 4 and preferably 0.l8 to l.5 weight parts of an aliphatic feedstock portion per weight part of an aromatic feedstock portion, said aliphatic feedstock portion comprising an aliphatic petroleum cracking or reforming feedstock fraction containing cationically polymerizable aliphatic hydrocarbon, less than 0.5 weight percent of cylodienes and a pentadiene - l,3 weight ratio to cyclodiene of greater than 50 and said aromatic feedstock portion comprising an aromatic stream boiling between 80°C and 260°C treated sequentially at least twice with sulfuric acid preferably concentrated sulfuric acid, and thereafter distilled to recover said aromatic feedstock portion.

Thus, in accordance with this invention there has been realized a process for producing a hydrocarbon resin of improved color and thermal stability which comprises at least twice directly treating a petroleum cracking or reforming fraction containing cationically polymerizable hydrocarbons with an acidic agent, distilling said treated fraction and recovering an at least twice acid refined distillate feedstock substantially free of said acidic agent, polymerizing said refined distillate feedstock in the presence of a Friedel-Crafts catalyst and recovering a resin having a Gardner color of no greater than 7, but usually 6 or less, when measured on a solution of equal weights of said resin and toluene.

More particularly, the invention is embodied in the preparation of improved petroleum resins which comprises blending: (A) an aliphatic feedstock portion obtained by isolating a steam cracked hydrocarbon petroleum fraction boiling between about more than 20°C to less than l40°C, said fraction being substantially below $C_9$, and thereafter heating said steam cracked fraction at about 90°C to l40°C to dimerize the cyclodienes, stripping the resulting fraction at a temperature sufficient to separate an overhead product from the dimerized cyclodienes, recovering as the overhead product a stream boiling between about more than 20°C to less than l40°C and having the following composition:

| Component | Weight Percent |
|---|---|
| Benzene | 15–30 |
| Toluene | 3–10 |
| $C_8$ Aromatics | 1 |
| Diolefins | 11–25 |
| Olefins | 70–29 |
| Paraffins | 0–5 |

said composition having a cyclodienes content of about 2 weight percent and more than 3.5 weight percent isoprene, fractionating said overhead product to reduce the isoprene content to below about 3.5 weight percent, and recovering a fraction reduced in isoprene content and having the following distillation analysis:

### Distillation

| | Weight Percent |
|---|---|
| I.B.I. – 38°C | 0–15 |
| 38–70°C | 25–50 |
| 70–130°C | 35–70 |
| 130°C + | 5 |

These overhead streams are heat soaked at from 135°C to 160°C for 1.5 to 5 hours whereby the cyclodiene content is reduced from about 2.0 to at least 0.5 weight percent. The heat soaked streams are distilled rejecting the heavier fraction of dimers formed without heating to the bottom stream whereby the resin feed stream is separated from the dimers and codimers of the cyclodienes to provide the aliphatic feedstock portion having cis and trans pentadiene-1,3 to cyclodiene weight ratio no greater than 50; and

(B) an aromatic feedstock portion obtained by sequentially treating a steam cracked aromatic petroleum fraction boiling between about more than 80°C to less than 260°C, said fraction being predominantly $C_8$ to $C_{10}$ olefinic aromatics, with concentrated sulfuric acid, distilling the treated fraction whereby from 40 to 95% of the overhead distillate is recovered to be used as the aromatic feedstock portion said aliphatic portion ranging from 5 to 80, preferably 15 to 60, percent based on the total weight of the blended portions of the feedstock.

More particularly, the invention is embodied in a process for the preparation of light colored aromatic petroleum resins which comprises at least twice, preferably twice to tetra, directly treating a steam cracked aromatic petroleum fraction boiling between about more than 80°C to less than 260°C with concentrated sulfuric acid, said fraction being predominantly $C_8$ to $C_{10}$ olefin aromatics distilling each treated fraction, recovering the final distillate fraction as the polymerization feedstock, subjecting said feedstock to a cationic catalyst and recovering an aromatic petroleum resin of light color.

The resins realized by this improved process of the invention are a hydrocarbon, preferably aluminum trichloride catalyzed aromatic resin having at least the following properties: a softening point as determined by ASTM Procedure E-28 of at least 75°C, generally 90 to 160°C, uniquely 95°C to 120°C, a color Gardner of no more than 7, preferably 4 or less when measured on a solution of equal weights of said resin and toluene; and a cloud point of less than 100°C as measured by the temperature at which haze occurs in a cooling mixture of 40 weight parts of 60°C melt point paraffin wax, 20 weight parts of ethylene vinylacetate copolymer having 28 wt.% vinyl acetate and 40 weight parts of said resin.

## DETAILED DESCRIPTION OF THE INVENTION

The invention is concerned with the production of cationically catalyzed petroleum resins of lightened color. This improvement is realized by treatment of the hydrocarbon fraction from which the resin is polymerized with an acid agent.

## I. Hydrocarbon Fraction.

The hydrocarbon fraction is obtained as a petroleum cracking or reforming fraction which can be characterized as highly unsaturated petroleum fractions produced from the steam cracking of petroleum gas oil fractions or heavy naphthas.

The process is applicable to all types of olefinically unsaturated hydrocarbon feedstocks including aliphatic, predominantly aliphatic, predominantly aromatic and aromatic. The hydrocarbon fraction to which this invention is most applicable is a vinyl aromatic fraction boiling between 80°C and 260°C, preferably between 130°C and 230°C in which styrene, methylstyrenes and indenes are the primary unsaturated constituents and is highly applicable to said fractions with less than 1% dicyclopentadiene. According to the conditions of cracking and fractionation, various di-unsaturated hydrocarbons, including dicyclopentadiene and divinyl compounds, may also be present as minor constituents.

This invention is concerned primarily with the production of resins from hydrocarbon mixtures obtained by cracking petroleum (or by another process in which all the unsaturated constituents can be so obtained) and in which none of the unsaturated constituents boils below 80°C (and preferably none below 120°C), at least 70% (preferably 95%) of the total weight of the unsaturated constituents consists of one or more of the substances styrene, methylstyrenes, and indenes, and said total weight does not contain as much as 10% of any diunsaturated substance.

A highly useful vinyl aromatic fraction contains styrene 4-10%, alpha-methylstyrene 1-5%, vinyl toluenes 16-25%, indene 9-15%, methylindenes 5-9% and less than 1% of dicyclopentadiene, based on the total weight of the fraction.

This invention as indicated also has utility for the acid refining according to this invention of $C_5$ aliphatic olefinic fractions which typically contain 0-5 wt.% isoprene, 10-15 wt.% cyclopentadiene, 10-15 wt.% piperylene, 5 wt.% normal olefins and 2-5 wt.% paraffins.

## 2. Acidic Agent.

The useful acidic agents are represented by strong acids and include sulfuric acid, oleum, methane sulfonic acid, acidic solid ion exchange resins, e.g. Amberlyst[R] 15 sold by Rohm & Haas of Philadelphia, PA, acidic molecular sieves and sulfonated acids, e.g. p-toluene sulfonic acid, all of which can be characterized as Bronsted acids.

The preferred acidic agent is sulfuric acid normally used as concentrated sulfuric acid of at least 92% to 108% preferably greater than 100%, optimally about 104%, concentration. The acid treatment as noted preferably has a sulfuric acid concentration greater than 100% to avoid corrosion in the distillation tower. Sulfuric acid has been widely used in the chemical refining of petroleum (see Chemical Refining of Petroleum by V. A. Kalichevsky and B. A. Stanger an ACS monograph published in 1942 by the Reinhold Publishing Corporation of N.Y., N.Y. and in particular Chapter II entitled Treatment With Sulfuric Acid, pages 45-55).

The acidic agent is used in amounts ranging from 0.1 to 1.0 preferably 0.2 to 0.7, optimally from 0.3 to 0.5, weight percent based on the total weight of the feedstock to be acid refined. Treatment times range from 0.05 to 10, preferably 0.08 to 5, optimally 0.5 to 3, hours residence time at a temperature of 0°C to 200°C, preferably ambient to 150°C.

The acid refining treatment is conducted in at least two, generally two to four successive steps, preferably two to three. When the acid treatment is employed twice, each acid treatment step, preferably is followed by the distillation and recovery of from 35 to 97 weight percent of the overhead to be further acid refined in the subsequent step which acid-refined overhead is thereafter redistilled.

The acid refined stream may be neutralized with a base such as sodium hydroxide, potassium hydroxide, calcium hydroxide, sodium bicarbonate, etc., in either dry form or as an aqueous solution. It may also be neutralized with amines such as diethylenetriamine, triethylenetetramine, etc., or ammonia. Neutralization improves the storage time of the acid refined stream and may be done either before or after the distillations.

### 3. Distillation

is necessary to substantially free the distillate feedstock of the acidic agent so that the feedstock will not have contaminants which poison or otherwise reduce the efficiency of the catalyst or darken the resin. Vacuum distillation is used to recover an aromatic fraction having a boiling range of 80°C to 260°C whereas the aliphatic distillate feedstock will typically be of a boiling range of 15°C to 80°C. Conventional distillation processes and equipments are employed to recover and further process the acid refined feedstock.

### 4. Cationic Polymerization and Recovery of the Resin.

The multiple acid treated and thereafter distilled resin feedstock mixture recovered as the final distillate feedstock may be used alone or in blends with other feedstocks to yield resins of lighter color. The feedstock produced by the process of the invention is polymerized in a conventional manner with conventional Friedel-Crafts catalyst preferably aluminum trichloride catalyst. The polymerizations can be run either batch wise or continuous.

It is also advantageous to use a non-reactive diluent in the reactor to reduce the polymerizate viscosity and improve heat transfer in the polymerizate. The diluent can be used in concentrations of 0 to 30%, but preferably about 10%, by weight based on the weight of the resin feedstock.

In batch runs the feedstock is added to the catalyst under an inert atmosphere. The usual catalyst concentrations are in the range of 0.2 to 5 weight percent and preferably 0.2 to 3.0 weight percent based on the resin feedstock. The resin feedstock is adjusted to the polymerization temperature of about 0 to 60°C and maintained at that temperature the prescribed length of time. The preferred conditions using aluminum chloride as the catalyst is 0.5 percent catalyst for a reaction temperature of 40°C for a period of about 1 to 2 hours.

In the continuous runs, catalyst and resin feedstock are added to a stirred reactor maintained at the polymerization temperature under an inert atmosphere. The concentration of aluminum chloride catalyst is usually in the range of 0.2 to 5.0 and preferably 0.2 to 3.0 percent by weight based on the weight of the feedstock the temperatures of the reactor at 0 to 60°C. The most suitable feed addition rate gives an approximate residence time of 0.3 to 2.0 hours.

The resultant resin polymerizable mixture is then quenched with an aqueous isopropanol solution to destroy the catalyst.

The resin thus formed may be recovered by water and/or alkali washing to remove catalyst, followed by stripping of the unpolymerized material. However, other methods for removing the catalyst from the polymerized products may be used.

The washed resin solutions are then stripped of the unreacted hydrocarbons boiling up to the end point of the feed naphtha (about 260°C). The resulting crude resin concentrate is then stripped under vacuum or with steam to remove liquid polymer and to recover a solid resin product having a softening point of 75°C or higher and a cloud point of less than 100°C.

The invention is described in more complete detail by the following examples although it is not intended to limit the scope of the invention thereto.

### Examples 1-9

A cracked petroleum fraction, having a boiling point range of 80 to 260°C and a composition of styrene 8.8 wt.%, alpha-methylstyrene 4.0 wt.%, vinyl toluenes 22.7 wt.%, indene 14.7 wt.% and methylindenes 7.3 wt.% was treated according to the process of this invention in multiple acid refining steps (two, three and four) for comparison of the resins obtained therefrom with the products resulting from no acid treatment and a single acid refining step. In each instance, acid refining was by treatment at each refining step with 104% $H_2SO_4$ for 0.75 hours at a temperature of from 134°C to 149°C with distillation under a reduced pressure of 5" of mercury with over 35, typically 60%, recovered overhead. In the test results, the control is shown as Example 1 with no acid treatment, followed by Examples 2 through 5 where the acid treatments were followed by distillation and recovery and in Examples 6 and 7 distillation is carried out after each acid refining step is completed and prior to the successive acid refining step(s).

Finally, Examples 8-9 show the results of two feedstocks each of which were subjected to a single acid refining step at different acid addition levels followed by distillation.

The resultant acid refined distillate feedstocks were then each separately cationically polymerized at 40°C with 0.4 wt.% AICl₃ catalyst for I hour. The resulting polymerizates were each stripped with heated nitrogen to remove unreacted materials, and then each stripped with steam at 250°C. The resultant products were then measured as to softening point, Gardner Color and cloud point. The results are set forth in Table I.

The resins from feedstock portions treated sequentially at least two times with acid were of markedly lighter color than those obtained from the no acid treated and singly acid treated feedstock while retaining the desirable softening point property.

The resin of the invention offers a unique combination of properties for although they are polymerized with an AICl₃ catalyst each has a high softening point and light color. This combination of properties make these resins particularly attractive to the hot melt adhesive industry.

TABLE I

| | Series 1 Distillation only After All Acid Refining Step(s) | | | | | Series 2 Distillation After Each Acid Refining Step | | | |
|---|---|---|---|---|---|---|---|---|---|
| Example Number | 1 | 2 | 3 | 4 | 5 | 6 | 7 | 8 | 9 |
| Number of Acid Refining Steps | None | One | Two | Three | Four | Two | Four | One | One |
| Sulfuric Acid Added at each Refining Step, wt. % | 0 | 0.4 | 0.4, 0.3 | 0.4, 0.3, 0.3 | 0.4, 0.3, 0.3, 0.3 | 0.3, 0.3 | 0.4, 0.3, 0.3, 0.3 | 0.55 | 0.7 |
| Distillation Percent Overhead | 65 | 63.5 | 56.8 | 37.3 | 49.6 | 68.4 | 69.2, 68.5, 85.1, 86.6 | 62.4 | 59.1 |
| Resin Finishing | | | | | | | | | |
| Yield, wt % | 45.3 | 44.7 | 42.6 | 36.6 | 33.1 | 36.7 | 18.6 | 38.3 | 36.1 |
| Resin Properties | | | | | | | | | |
| Softening Point °C (a) | 128 | 130 | 110 | 93 | 106 | 110 | 80 | 124 | 116 |
| Gardner Color (b) | 13 | 6.2 | 4.3 | 3.9 | 3.7 | 3.8 | 3.8 | 6.5 | 6.0 |
| Cloud Point °C (c) | 67 | 132 | 92 | 90 | 71 | 90 | 67 | 67 | 71 |

(a) measured according to ASTM E-28.
(b) 50 wt. % resin solution in toluene.
(c) The temperature at which there is an appearance of haze or "cloud" in a mix of 40 weight parts of 60°C melt point paraffin wax, 20 weight parts of Escorene® 7750 (an ethylene vinylacetate copolymer), Exxon Chemical Americas, and 40 weight parts of test resin heated to 200°C and allowed to cool in air with stirring.

The invention is also concerned with the production of cationically catalyzed aromatic petroleum resins of lightened color and high softening point. The improved resin is realized by utilization of a feedstock which is the blend of an aliphatic portion and an aromatic portion.

### (A) The Aliphatic Feedstock Portion

This portion of the feedstock is a $C_5/C_6$ highly unsaturated petroleum fraction produced from the steam cracking of petroleum gas oil fractions or heavy naphthas. The resulting liquid cut boiling below about the boiling point of $C_9$ olefins but containing components up to $C_{14}$ is segregated and heated at from about 90°C to 140°C to dimerize the cyclodienes. Thereafter a $C_8$ to $C_9$ and lighter liquid cut including $C_5$ is taken overhead and there is separated a dimer concentrate as bottoms. The overhead stream has a materially reduced content, i.e. about 2 weight percent, of cyclodienes, most usually cyclopentadiene and methyl cyclopentadiene.

This overhead stream is then fractionated to remove at least half of the isoprene containing fraction boiling below 38°C and is the raw material, which is thereafter heat soaked to provide a feed material having a cyclodiene content of less than about 0.5, preferably less than 0.2, weight percent.

Table II shows the typical boiling characteristics of the overhead streams and the composition (as computed by Gas Chromatography).

## TABLE II

### Typical Boiling Characteristics

### For Overhead Streams

[Boiling range 20-140°C, predominantly 30-130°C and containing 15 wt. percent or less of substances boiling below 38°C. (including 3.5 wt. percent or less isoprene on the total stream)]

|  | Distillation Range | |
|---|---|---|
| I.B.P. – 38°C | 0–15 wt. % | |
| 38–70°C | 25–50 wt. % | |
| 70–130°C | 35–70 wt. % | |
| 130°C | 5 | |
| **Composition** | | |
| Diolefins, Conj. | 11–25 | |
| Isoprene | | 1.5–3.5 |
| Piperylene | | 7–15 |
| Cyclopentadienes | | 1.5–2.5 |
| Others | | 4–7.5 |
| Aromatics | 18–41 | |
| Benzene | | 15–30 |
| Toluene | | 3–10 |
| $C_8$ Aromatics | | 1 |
| Paraffins | 0–5 | |
| Mono-Olefins | 29–70 | |

These overhead streams are heat soaked at from 135°C to 160°C, preferably 140°C to 150°C, for 1.5 to 5, hours whereby the cyclodiene content is reduced from about 2.0 to at least 0.5, preferably at least 0.2, weight percent. The heat soaked streams are distilled as by conventional methods capable of rejecting to the heavier fraction the dimers formed without heating the bottom stream sufficiently to recrack the formed dimers whereby the resin feed stream is separated from the dimers and codimers of the cyclodienes to provide the aliphatic feedstock portion having a typical analysis as seen in Table II wherein the feedstock was heated soaked at l49°C for five hours and then adjusted by distillation.

## Table III

| Diolefins | wt.% |
|---|---|
| Isoprene | 1.3 |
| c & t-Pentadiene-1, 3* | 44.5 |
| Cyclopentadiene | 0.18 |
| Monoolefins | 37.6 |
| Paraffins | 3 |
| Benzene | 1 |
| Toluene | - |
| Piperylene | 247 (ratio) |
| cyclopentadiene | |

*Combination also known as piperylene

The weight ratio of piperylene to cyclopentadiene remaining after heat soaking and distillation in the resin feed should be at least 50, preferably l00, optimally over 200, as seen in Table III.

In summary, the aliphatic feed would usefully have the following broad composition as seen in Table IV:

## TABLE IV

| Component | Wt. % Range |
|---|---|
| Pentene-1 | 1-5 |
| Isoprene | 0.5-3 |
| c&t-Pentene-2 | 5-10 |
| 2-Methylbutene-1&2 | 1-15 |
| c&t-Pentadiene-1,3 | 20-50 |
| Cyclopentene | 12-20 |
| 3&4-Methylpentene | 1-5 |
| Cyclopentadiene | 0.05-0.2 |
| c&t-pentadiene | 50 (ratio) |
| cyclopentadiene | |

(B) The Aromatic Hydrocarbon Fraction

The aromatic hydrocarbon fraction can be characterized as a highly unsaturated petroleum fraction produced from the steam cracking of petroleum gas oil fractions or heavy naphthas. This fraction is a vinyl aromatic fraction boiling between 80°C and 260°C, preferably between l30°C and 230°C in which styrene, methylstyrenes and indenes are the primary unsaturated constituents. According to the conditions of cracking and fractionation, various di-unsaturated hydrocarbons including dicyclopentadiene and divinyl compounds, may also be present as minor constituents.

A highly useful aromatic fraction is that in which none of the unsaturated constituents boils below 80°C, preferably none below l20°C and at least 70%, preferably 95% of the total weight of the unsaturated constituents consists of one or more of the substances styrene, methylstyrenes, and indenes, and said total weight does not contain as much as 10% of any diunsaturated substance.

A highly useful vinyl aromatic fraction is styrene 4-10%, alpha-methylstyrene 1-5%, vinyl toluenes 10-30%, indene 7-15% and methylindenes 0-10%.

The aromatic fraction is sequentially treated with an acidic agent. The useful acidic agents are represented by strong acids and include sulfuric acid, oleum, methane sulfonic acid, acidic solid ion exchange resins, e.g. Amberlyst® 15 sold by Rohm & Haas of Philadelphia, PA, acidic molecular sieves and sulfonated acids, e.g. p-toluene sulfonic acid, all of which can be characterized as Bronsted acids.

The preferred acidic agent is sulfuric acid optimally used as concentrated sulfuric acid of 92% to 108% concentration. Sulfuric acid has been widely used in the chemical refining of petroleum (see Chemical Refining of Petroleum by V. A. Kalichevsky and B. A. Stanger and ACS monograph published in 1942 by the Reinhold Publishing Corporation of N.Y., N.Y. and in particular Chapter II entitled Treatment With Sulfuric Acid, pages 45-55).

The acidic agent is used in amounts ranging from 0.1 to 1.0 preferably 0.2 to 0.7, optimally from 0.2 to 0.5, weight percent based on the total weight of the aromatic feedstock portion. Treatment times range from 0.008 to 10, preferably 0.08 to 5, optimally 0.25 to 3, hours residence time at a temperature of 0°C to 200°C, preferably ambient to 150°C.

Distillation is necessary to substantially free the acid treated aromatic fraction of the acidic agents so that the fraction will not have contaminants which poison or otherwise reduce the efficiency of the catalyst and/or darken the resin. Vacuum distillation is used to recover an aromatic portion having a boiling range of 80°C to 260°C whereas the aliphatic distillate portion will typically be of a boiling range of 15°C to 80°C. Conventional distillation processes and equipments are employed. Typically, a useful aromatic hydrocarbon feedstock portion contains:

## TABLE V

| Component | Wt. % |
|---|---|
| Styrene | 4-10 |
| Alpha-Methylstyrene | 1-5 |
| m-Methylstyrene | 7-15 |
| o-Methylstyrene | 1-5 |
| p-Methylstyrene | 2-10 |
| ß-Methylstyrene | 1-7 |
| Indene | 7-15 |
| Divinylbenzene | 0-5 |
| Methylindenes | 0-10 |

The acid refined aromatic feedstock portion is blended with the aliphatic feedstock portion in from 0.25 to 19 weight parts per weight part of aliphatic feedstock.

The blended feedstock may be polymerized in a conventional manner with conventional Friedel-Crafts catalyst preferably aluminum trichloride catalyst. The polymerizations can be run either batch wise or continuous.

In batch runs the blended feedstock is added to the catalyst under an inert pressurized atmosphere. The usual catalyst concentrations are in the range of 0.2 to 5 weight percent and preferably 0.2 to 3.0 weight percent based on the resin feedstock. The aliphatic/aromatic blended feedstock is adjusted to the polymerization temperature of about -5° to 60°C and maintained at that temperature the prescribed length of time. The preferred conditions using aluminum chloride as the catalyst is 0.6 percent AlCl3 for a reaction temperature of 0°C for a period of about 1 to 2 hours.

In the continuous runs, catalyst and aliphatic-aromatic feedstock are added to a stirred pressurized reactor maintained at the polymerization temperature under an inert atmosphere. The concentration of aluminum chloride catalyst is usually in the range of 0.2 to 3 and preferably 0.3 to 0.8 by weight with the temperatures of the reactor at -5° to 60°C. The most suitable feed addition rate gives an approximate residence time of 0.3 to 2.0 hours. The resin thus formed may be recovered by water and/or alkali washing to remove catalyst, followed by stripping of the unpolymerized material. However, other methods for removing the catalyst from the polymerized products may be used.

The washed resin solutions are then stripped of unreacted hydrocarbons boiling up to the end point of the feed naphtha, about 260°C. The resulting crude resin concentrate is then stripped under vacuum or with steam to remove liquid polymer and to recover a solid resin product having a softening point of 90°C to II5°C and a very pale color.

The resin is also characterized by proton and carbon I3 (C¹³) NMR as follows (all percents are in weight percent based on the total weight of the resin):

° 35 to 65%, preferably 40 to 60%, optimally 45 to 55% aromatic and non-aromatic unsaturated carbons;
° 35 to 65% preferably 40 to 60%, optimally 45 to 55% saturated carbons;
° I to I5%, preferably 2 to 8% of the hydrogens bonded to non-aromatic unsaturated carbons;
° 50 to 80%, preferably 62 to 72% of the hydrogens bonded to saturated carbons;
° I5 to 35%, preferably 22 to 32% of the hydrogens bonded to aromatic carbons;

The invention is described in more complete detail by the following examples although it is not intended to limit the scope of the invention thereto.

EXAMPLE IO

An aliphatic/aromatic feedstock blend of the following composition:

## TABLE VI

| Monomer | wt. % |
|---|---|
| 2-Methylbutene-2 | 1-4 |
| c&t-Pentadiene-1,3 | 5-15 |
| Cyclopentene | 3-10 |
| Styrene | 4-8 |
| alpha-Methylstyrene | 1-4 |
| m-Methylstyrene | 5-12 |
| o-Methylstyrene | 1-4 |
| p-Methylstyrene | 1-8 |
| ß-Methylstyrene | 1-6 |
| Indene | 5-12 |

was cationically polymerized at 0°C with 0.6 wt.% AlCl₃ catalyst for I hour. The resulting polymerizate was stripped by heating to 250°C under nitrogen to remove unreacted materials, then stripped with steam at 250°C and the resultant resin product was evaluated. The properties of the resin are set forth in Table VII.

11

## TABLE VII

| | |
|---|---|
| Softening Point, °C (a) | 98.5 |
| Color, Gardner (b) | 1.6 |
| Yield, % | 35.6 |
| Cloud Point °C (c) | 115 |
| Tg °C (d) | 46.5 |

GPC Molecular Weight (Polyisobutylene Standard)

| | |
|---|---|
| Number Average (Mn) | 968 |
| Weight Average (Mw) | 1532 |
| Mw/Mn | 1.6 |
| Peak | 1250 |

(a) measured according to ASTM E-28

(b) 50 wt.% resin solution in toluene

(c) The temperature at which there is an appearance of haze or "cloud" in a mix of 20 parts 60°C melt point paraffin wax, 30 parts of Escorene® 7750 (ethylene vinylacetate) and 50 parts test resin heated to 200°C and allowed to cool in air with stirring.

(d) measured Glass Transition Temperature Tg by DSC.

A blend of resins batch polymerized from this feed and under these conditions was analyzed by proton and $C^{13}$ NMR. The results are as follows:

° 50.6 weight percent of the carbon atoms are aromatic and non-aromatic unsaturated;
° 49.4 weight percent of the carbon atoms are saturated;
° 27.6 weight percent of the hydrogen atoms are bonded to aromatic carbons;
° 67.8 weight percent of the hydrogen atoms are bonded to saturated carbons;
° 4.6 weight percent of the hydrogen atoms are bonded to non-aromatic unsaturated carbons.

The composition of the resin is illustrated by the values set forth in Table VIII.

## TABLE VIII

### Resin Monomer Composition:

| Monomer | Calculated Mole % in Resin |
|---|---|
| 2-Methylbutene-2 | 1-5 |
| c&t-Pentadiene-1,3 | 10-25 |
| Cyclopentene | 1-7 |
| Styrene | 7-20 |
| alpha-Methylstyrene | 1-5 |
| m-methylstyrene | 15-35 |
| o-Methylstyrene | 4-11 |
| p-Methylstyrene | 8-20 |
| ß-Methylstyrene | 1-5 |
| Indene | 10-25 |

The invention in its broader aspect is not limited to the specific details shown and described and departures may be made from such details without departing from the principles of the invention and without sacrificing its chief advantages.

**Claims**

1. A predominantly to entirely aromatic resin obtained by Friedel-Crafts polymerization of a predominantly to entirely aromatic fraction feedstock of $C_8$ to $C_{10}$ olefinic aromatics such as styrenes and indenes, said resin having a softening point of 75-160°C and a Gardner color no greater than 4.

2. A resin according to claim 1 having 15-35 percent of the hydrogens bonded to aromatic carbons.

3. A resin according to claim 1 or claim 2 having 35-65 percent aromatic and non-aromatic unsaturated carbons, 35-65 percent saturated carbons, 1-15 percent of the hydrogens bonded to non-aromatic unsaturated carbons, and 50-80 percent of the hydrogens bonded to saturated carbons.

4. A resin according to any of claims 1 to 3 having a softening point of about 75-120°C.

5. A resin according to any of claims 1 to 4 having a softening point of about 90-115°C.

6. A resin according to any of the preceding claims having a wax cloud point of less than 120°C.

7. A resin according to any of the preceding claims having a wax cloud point of less than 100°C.

8. A resin according to any of the preceding claims in which the feedstock is an aromatic petroleum fraction boiling between 80°C and 260°C.

9. A resin according to claim 1 wherein said feedstock is a blend of aromatic feedstock portion and aliphatic feedstock portion, said aliphatic feedstock portion containing less than 0.5 weight percent cyclodienes and a piperylene/cyclodiene weight ratio greater than 50.

10. The resin of claim 9 wherein said aliphatic feedstock portion contains less than 0.2 weight percent cyclodienes and a piperylene/cyclodiene weight ratio greater than 200.

11. The resin of claim 9 wherein said aromatic portion is at least twice sequentially acid refined and distilled.

12. A resin according to any of claims 9 to 11 wherein said aliphatic portion has the compositional range:

| Component | |
|---|---|
| Pentene-1 | 1-5 wt.%; |
| Isoprene | 0.5-3 wt.%; |
| c&t-Pentene-2 | 5-10 wt.%; |
| 2-Methylbutene-1&2 | 1-15 wt.% |
| c&t-Pentadiene-1,3 | 20-50 wt.%; |
| Cyclopentene | 12-20 wt.%; |
| 3&4-Methylpentene | 1-5 wt.%; |
| Cyclopentadiene | 0.05-0.2 wt.%; and a |
| c&t-pentadiene/cyclopentadiene | 50 (ratio) |

13. A resin according to any of the preceding claims wherein said aromatic portion contains: styrene, 4-10%; alpha-methylstyrene, 1-5%; vinyl toluenes, 10-30%; indene, 7-15%; and methylindenes, 0-10%.

14. The predominantly aromatic petroleum resin according to claim 1 having a monomer composition comprising 2-Methylbutene-2, 1-5 mole %;
c&t-Pentadiene-1-3, 10-25 mole %; Cyclopentene, 1-7 mole %; Styrene, 7-20 mole %; alpha-Methylstyrene, 1-5 mole %; m-methylstyrene, 15-35 mole %; 0-Methylstyrene, 4-11 mole %; p-Methylstyrene, 8-20 mole %; beta-Methylstyrene, 1-5 mole %; and Indene, 10-25 mole %.

15. The use of a resin according to any of the preceding claims as an adhesive tackifier.

16. A process for the production of an aromatic feedstock for the production of a resin according to claim 1 comprising sequentially treating an aromatic stream boiling between 80 and 260°C which contains $C_8$ to $C_{10}$ olefinic aromatics at least twice, with concentrated sulfuric acid and thereafter distilling said stream to recover a lighter polymerization fraction ranging from 40 to 95 weight percent of said treated stream.

17. A process for producing a petroleum resin of light color and high softening point which comprises polymerising a feedstock blend of cationically polymerizable aliphatic and aromatic hydrocarbons in the presence of Friedel-Craft catalyst and recovering a resin having Gardner color of no greater than 4 when measured on a solution of equal weights of said resin and toluene and a softening point of 90°C to 115°C as determined by ASTM Procedure E-28, said blend comprising from 0.05 to 4 and preferably 0.18 to 1.5 weight parts of an aliphatic feedstock portion per weight part of an aromatic feedstock portion, said aliphatic feedstock portion comprising an aliphatic petroleum cracking or reforming feedstock fraction containing cationically polymerizable aliphatic hydrocarbon, less than 0.5 weight percent of cyclodienes and a pentadiene-1,3 weight ratio of cyclodiene of greater than 50 and said aromatic feedstock portion comprising an aromatic stream boiling between 80°C and 260°C treated sequentially at least twice with sulfuric acid and thereafter distilled to recover said aromatic feedstock portion, said feedstock blend containing a greater proportion by weight of unsaturated aromatic materials than unsaturated aliphatic materials.

14

C$^{13}$ NMR OF RESIN OF EXAMPLE 10

Aromatic and unsaturated carbon, %    50.6
Saturated carbon, %                   49.4

**FIG.IA**

**FIG.IB**

FIG.2

PROTON NMR OF RESIN OF EXAMPLE 10

Aromatic Protons, %                  27.6
Protons on Unsaturated Carbons        4.6
Protons on Saturated Carbons         67.8

0233074